# EUROPÄISCHE PATENTSCHRIFT

(11) **EP 2 143 835 B1**
(45) Veröffentlichungstag und Bekanntmachung des Hinweises auf die Patenterteilung: **28.10.2015**
(21) Anmeldenummer: 08160255.9
(22) Anmeldetag: 11.07.2008
(51) Int. Cl.: D03C 1/14, F16C 35/06, F16C 43/06

(54) **Lagereinrichtung und Unterzug für Webmaschine**
Storage device and beam for loom
Dispositif de stockage et entrait pour machine à tisser

(43) Veröffentlichungstag der Anmeldung: 13.01.2010
(73) Patentinhaber: Groz-Beckert KG, 72458 Albstadt (DE)
(72) Erfinder: Bruske, Johannes, Dr., 72458 Albstadt (DE)
(74) Vertreter: Rüger, Barthelt & Abel

(56) Entgegenhaltungen:
- EP-A- 0 602 711
- DE-C- 370 999
- GB-A- 100 780
- GB-A- 607 890

## Beschreibung

Die Erfindung betrifft eine Lagereinrichtung für Unterzüge von Webmaschinen sowie einen solchen Unterzug.

Webmaschinen weisen Webschäfte auf, die Litzen zur Kettfadenführung tragen. Die Webschäfte führen im Betrieb schnelle Vertikalbewegungen aus. Um den Webschäften diese Vertikalbewegungen zu erteilen, sind Gestänge vorgesehen, die auch als Unterzüge bezeichnet werden. Jeder Webschaft ist über einen solchen Unterzug mit einer Schaftantriebsmaschine verbunden.

Der Unterzug umfasst Zug- und Druckstangen, die sich zum Beispiel horizontal unterhalb der Webschäfte erstrecken. Sie bestehen aus Antriebsstangen, gegebenenfalls mit Gelenken an beiden Enden, und Winkelhebeln, die an dem Maschinengestell schwenkbar gelagert sind.

Wegen der Auf- und Abbewegung der Schäfte findet an den Lagerstellen eine oszillierende Bewegung statt. Diese Beanspruchung erfordert eine besondere Ausführung der Lagerung. Der Drehsinn wechselt mit der Frequenz der Webmaschine. Die zu übertragenden radialen Kräfte sind schwingender Natur und relativ hoch, während die axialen Kräfte gering sind. Vibrationen der Maschine werden ebenfalls auf die Lagerstellen übertragen.

Es wird angestrebt, an den betreffenden Lagestellen Wälzlager anzuordnen, um Verschließ und Reibung in Grenzen zu halten. Zum Beispiel schlägt die EP 0 602 711 die Verwendung von Kugellagern an Anschlussstellen von Webschäften vor. Ein gewisses radiales Lagerspiel, wie es bei Kugellagern üblich ist, führt hier jedoch wegen der schwingenden und stoßenden Belastung an den Umlenkhebel zu erheblichen Problemen. Diese oszillierende Bewegung der Umlenkhebel führt zu einer besonders hohen Belastung der Wälzlager, so dass diese eine hohe Tragzahl aufweisen müssen. Hingegen sind die auftretenden Axialkräfte gering.

Dem Stand der Technik gemäße Wälzlager weisen häufig einen gesprengten Außenring auf. Dieser Außenring ist mit einer Trennfuge versehen, um ihn bedarfsweise etwas aufweiten zu können. Dadurch lässt sich der gesamte Raum zwischen dem Innenring und dem Außenring mit Wälzkörpern füllen, so dass das Wälzlager eine hohe Tragfähigkeit bekommt. Mit dieser Lösung ist aber ein entsprechender Verlust an Präzision verbunden.

Es ist auch schon bekannt geworden, auf die Sprengung des Außenrings zu verzichten und anstelle dessen, Einfüllöffnungen vorzusehen, über die die Kugeln zwischen den Innenring und den Außenring eingeführt werden können. Dazu wird auf die DE PS 1 916 802 verwiesen. Der Außenring und der Innenring dieses Wälzlagers sind jeweils mit einer Axialnut versehen, durch die Kugeln in die Laufbahnen eingeführt werden können.

Es muss aber sichergestellt werden, dass die Wälzkörper, beispielsweise Kugeln, zwischen den Lagerringen bleiben und nicht etwa durch die Einfüllnut wieder nach außen gelangen. Dies gilt insbesondere, wenn schwingende oder stoßende Belastungen zu erwarten sind.

Die DE-OS 24 07 477 offenbart ein Wälzlager, dessen Innenring entlang der Laufbahn einen Bord aufweist, der mit einer Ausnehmung zum Einfüllen von Wälzkörpern versehen ist. In dieser Ausnehmung wird nach Einfüllen der Wälzkörper in das Lager ein Verschlussstück eingesetzt und gesichert.

Bei kleineren Lagern wird das Füllstück sehr filigran. Eine dauerhafte Sicherung ist bei schwingender und stoßender Belastung kaum möglich.

Davon ausgehend, ist es Aufgabe der Erfindung, eine Lagereinrichtung für Unterzüge von Webmaschinen und einen solchen Unterzug anzugeben.

Diese Aufgabe wird durch die Lagereinrichtung nach Anspruch 1 und dem Unterzug nach Anspruch 11 gelöst:
Die erfindungsgemäße Lagereinrichtung umfasst mindestens ein Wälzlager, das einen Innenring und einen Außenring aufweist. Zwischen den Wälzlagern sind mehrere Wälzkörper angeordnet. Der Innenring, der Außenring oder beide Ringe sind mit einer Wälzkörpereinfüllausnehmung versehen, deren Weite geringer als der Durchmesser der verwendeten Wälzkörper. Die lichte Weite der Wälzkörpereinfüllausnehmung, die insbesondere in Radialrichtung des Kugellagers zu messen ist, ist vorzugsweise nur geringfügig kleiner als der Wälzkörperdurchmesser. Die Montage, d.h. das Einfüllen der Wälzkörper in das Lager, ist aber dennoch möglich, weil sich bei der Montage der Wälzkörper der Außenring und/oder der Innenring geringfügig elastisch verformen kann. Dadurch wird die Wälzkörpereinfüllausnehmung gerade eben groß genug, um den Wälzkörper in den Innenraum des Wälzlagers eindringen zu lassen. Dadurch wird es möglich, das Wälzlager käfiglos, zum Kugel an Kugel auszubilden, was eine hohe Tragzahl ergibt. Außerdem kann der Außenring ohne Sprengriss präzise gefertigt werden. Die Präzision geht nicht durch ein etwaiges Auftrennen des Außenrings (d.h. durch einen Sprengriss) wieder verloren.

Der Außenring des Wälzlagers ist bei der erfindungsgemäßen Lagereinrichtung von einem Lagersitz eines Gehäuses der Lagereinrichtung unter radialer Einspannung aufgenommen. Der Innenring weist beidseitig konisch verlaufende Fasen auf, und wird mittels Halteimittel befestigt. Die Haltemittel können in Form einer Schraube oder Mutter ausgebildet sein, die über ein Blechteil eine radiale Spannung auf den Innenring ausüben. Die Größe der Spannung ist von dem Drehmoment abhängig mit dem die Schraube und die Mutter befestigt werden. Die radiale Einspannung wird durch den Presssitz des Außenrings in dem Lagersitz des Gehäuses bewirkt. Hierdurch wird der Außenring in seinem Durchmesser reduziert während der Innenring etwas aufgeweitet, d.h. in seinem Durchmesser vergrößert wird. Diese Durchmesserveränderungen des Außen- bzw. Innenrings können dazu genutzt werden, jedes Radialspiel des Wälzlagers zu beseitigen. Die Vorspannung kann sich in einem Anstieg des Drehmoments äußern, das erforderlich ist, um den Außenring gegenüber dem Innenring zu verdrehen. Durch die Beseitigung des Radialspiels bewirkt sie aber eine hohe Lebensdauer des Lagers. Außerdem hat die Vorspannung in Bezug auf die Wälzlagereinfüllausnehmung den weiteren Vorteil, dass die Wälzkörper das Lager nicht mehr verlassen können. Die Vorspannung kann bewirken, dass die Wälzkörpereinfüllausnehmung, deren Weite schon ohnehin etwas geringer als der Durchmesser der verwendeten Wälzkörper ist, noch weiter reduziert wird.

Die genannten Vorteile kommen insbesondere deshalb zum Tragen, weil bei dem Unterzug kaum Axialkräfte auftreten.

Die Wälzkörper sind Kugeln. Diese lassen sich mit den genannten Maßnahmen leicht zwischen den Innenring und den Außenring einführen. Die Wälzkörpereinfüllöffnung wird vorzugsweise als gerundete Nut ausgebildet. Die Erfindung ist aber auch bei Wälzlagern mit anderen Wälzkörpern anwendbar.

Die Differenz zwischen der Weite der Wälzkörpereinfüllausnehmung und dem Wälzkörper- bzw. Kugeldurchmesser ist vorzugsweise so gering, dass sie durch rein elastische Verformung des Außenrings und/oder des Innenrings überwunden werden kann.

Die genannte Lagereinrichtung gehört zu dem Unterzug einer Webmaschine. Sie kann insbesondere Teil eines Umlenkhebels oder Teil einer Zug- und Druckstange sein. Insbesondere eignet sich die erfindungsgemäße Lagereinrichtung für das Schwenklager eines Umlenkhebels oder zur Verwendung an den Verbindungsgelenken zwischen Zug- und Druckstangen und Umlenkhebeln. Es kann dabei vorteilhaft sein, die Einfüllöffnungen der verwendeten Wälzlager an vorbestimmten Stellen anzuordnen. Dies sind vorzugsweise Stellen, an denen die angreifenden Lagerkräfte gering sind. Die Stellen können an den Umlenkhebeln, Unterzugstangen oder sonstigen Getriebeelementen durch eine Markierung bezeichnet sein. Bei der Montage der Wälzlager sind die Wälzkörper Einfüllausnehmungen dann an diesen Stellen anzuordnen. Die sichtbare Markierung gestattet eine winkelgenaue Montage der Wälzlager in dem Unterzug, d.h. im rechten Winkel zu der Hauptkraftrichtung bzw. zu den Unterzugstangen. Diese Lage wird auch als neutrale Lage bezeichnet.

Die Wälzlager sind vorzugsweise beidseitig mit einer Dichtung z.B. in Form ringförmiger Dichtungsscheiben versehen. Damit kann ein Schmierstoff, zum Beispiel Fett, für oszillierende Lager in das Lager eingebracht werden. Eine so genannte Lebensdauerschmierung wird bevorzugt.

Weitere Einzelheiten vorteilhafter Ausführungsformen der Erfindung ergeben sich aus der Beschreibung, der Zeichnung oder aus Ansprüchen. Die Beschreibung beschränkt sich auf wesentliche Aspekte der Erfindung und sonstiger Gegebenheiten. Die Zeichnung offenbart weitere Details und ist ergänzend heranzuziehen. Es zeigen:
Fig. 1 einen Webschaft mit Schaftantriebsmaschine und Unterzug, in schematisierter Darstellung-.
Fig. 2 einen Winkelhebel des Unterzugs nach Figur 1, in ausschnittsweiser schematisierter Ansicht.
Fig. 3 ein Kugellager des Winkelhebels nach Figur 2 mit entfernter Dichtung, in Stirnansicht.
Fig. 4 das Kugellager nach Figur 3, geschnitten entlang der Linie IV-IV und
Fig. 5 das Kugellager nach Figur 3, in einer ausschnittsweisen Darstellung zur Veranschaulichung von Größenbeziehungen.

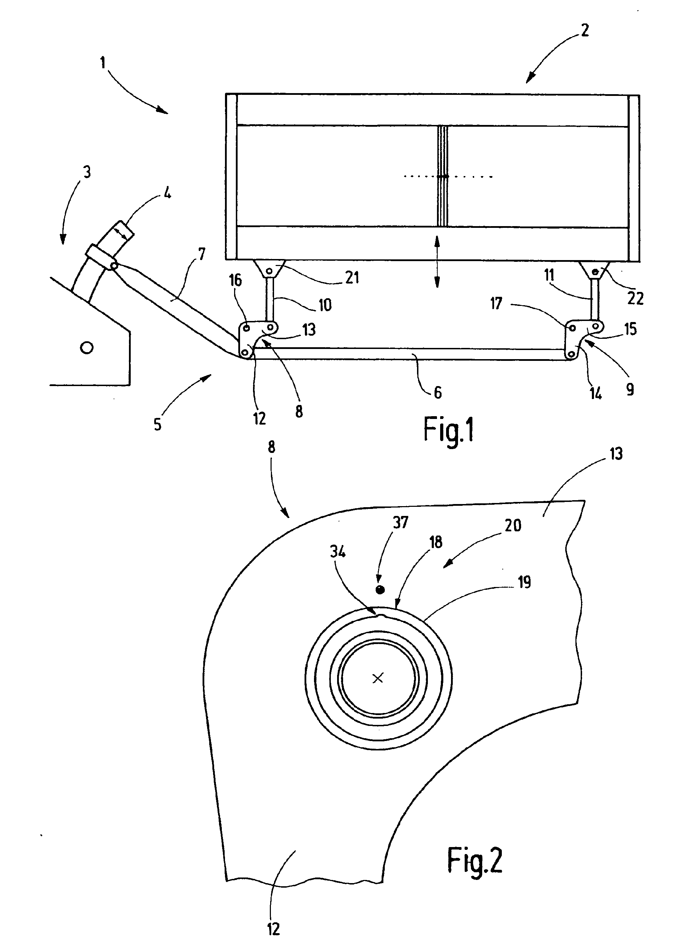

In Figur 1 ist eine Fachbildemaschine 1 für eine Webmaschine veranschaulicht. Zu der Fachbildemaschine 1 gehören Webschäfte 2, von denen in Figur 1 lediglich einer veranschaulicht ist. Die Webschäfte 2 dienen der Kettfadenführung und werden bei Betrieb der Webmaschine schnell auf und ab bewegt, was in Figur 1 durch einen Doppelpfeil angedeutet ist. Zum Antrieb dient eine Schaftantriebsmaschine 3, deren Abtrieb durch schwingend angetriebene Schafthebel 4 gebildet ist. Jedem Webschaft 2 ist ein Schafthebel 4 zugeordnet. Die Antriebsverbindung zwischen dem Schafthebel 4 und dem Webschaft 2 wird durch einen Unterzug 5 gebildet, der ein Hebelgetriebe darstellt. Zu dem Unterzug gehören Getriebeelemente in Gestalt von mindestens einer Zug- und Druckstange, die auch als Unterzugstange 6 bezeichnet wird, mindestens eine Lasche 7, die die Antriebsbewegung des Schafthebels 4 auf das übrige Gestänge überträgt, mindestens zwei Umlenkhebel 8, 9 und Hebestangen 10, 11.

Die Umlenkhebel 8 sind als Winkelhebel ausgebildet. Sie weisen jeweils zwei zum Beispiel einen rechten Winkel miteinander einschließende Arme 12, 13; 14, 15 auf. Beispielsweise sind die Arme 12, 14 mit der Unterzugstange 6 gelenkig verbunden. Die sich nach oben erstreckenden Hebestangen 10, 11 sind unten mit den Hebelarmen 13, 15 gelenkig verbunden und oben an den Webschaft angeschlossen. Die Umlenkhebel 8, 9 sind an Lagerstellen 16, 17 am Maschinengestell schwenkbar gelagert. Die Lagerstellen 16, 17 enthalten vorzugsweise mindestens ein Wälzlager 18, wie es in Figur 2 veranschaulicht ist. Das Wälzlager 18 bildet gegebenenfalls mit dem ihm zugeordneten Lagersitz 19 eine Lagereinrichtung 20 zur schwenkbaren Lagerung des Umlenkhebels 8. Entsprechende Lagereinrichtungen können an den Enden der Unterzugstange 6 und/oder an den Enden der Hebelarme 12 bis 15 und/oder an den Enden der Lasche 7 oder an Anschlussstellen 21, 22 des Webschafts 2 angeordnet sein. Die nachfolgende Beschreibung der Lagereinrichtung 20 dient deshalb stellvertretend für alle anderen Lagereinrichtungen, sofern diese, wie es der Fall sein kann, entsprechend der Lagerstelle 20 ausgebildet sind.

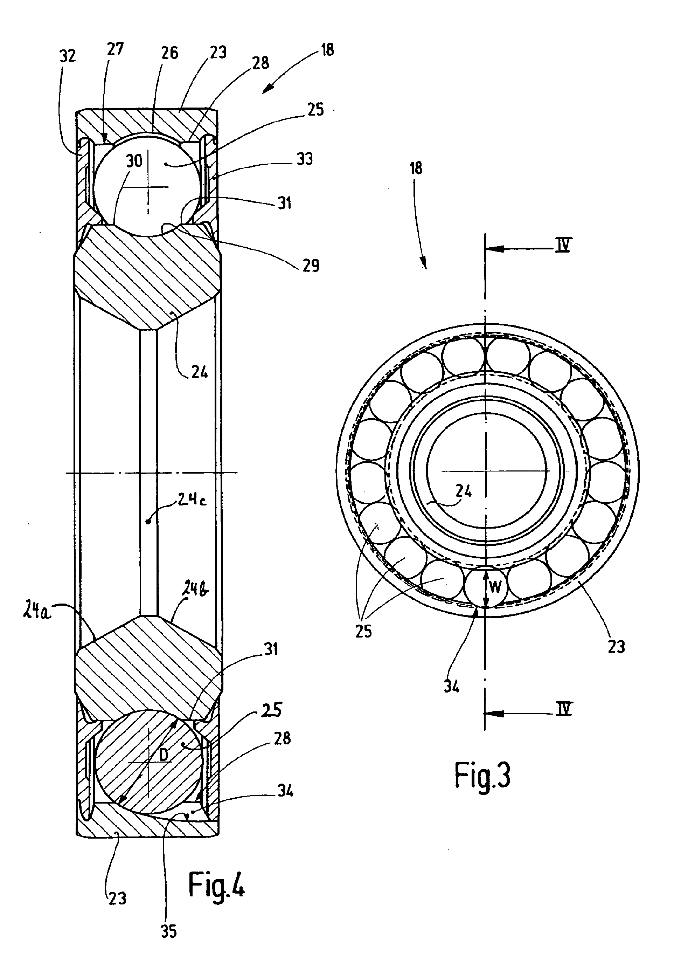

Das Wälzlager 18 ist beispielsweise gemäß Figur 3 als Kugellager ausgebildet. Es weist einen Außenring 23, einen Innenring 24 und eine Anzahl dazwischen angeordneter Kugeln 25 auf. Die Kugeln sind käfiglos gehalten. Sie stoßen mit geringem Spiel aneinander.

Der Außenring 23 ist, wie Figur 4 zeigt, mit einer Laufbahn 26 versehen, die beidseits von Borden 27, 28 begrenzt wird. Der Innenring 24 weist ebenfalls eine Laufbahn 29 auf, die beidseits von Borden 30, 31 eingegrenzt ist. Der zwischen den Laufbahnen 26, 29 begrenzte Innenraum, den weitgehend die Kugeln 25 einnehmen, ist an beiden Axialseiten durch ringförmige Dichtungen 32, 33 abgeschlossen. Der Innenraum ist außerdem mit einer Schmiermittelfüllung versehen, durch die die Kugeln 25 für die Lebensdauer des Wälzlagers 18 geschmiert sind.

Eine Besonderheit des Wälzlagers 18 liegt in der aus den Figuren 3 und 4 ersichtlichen Wälzkörpereinfüllausnehmung 34, die als gerundete, in Axialrichtung verlaufende Nut ausgebildet sein kann, die einen der Borde 27, 28, 30, 31 durchquert. Vorzugsweise ist die Wälzkörpereinfüllausnehmung 34 in den Außenring 23 angeordnet und durchbricht somit den Bord 28. Die Wälzkörpereinfüllausnehmung 34 weist in Radialrichtung eine Weite W (siehe Figur 3) auf, die vorzugsweise etwas geringer ist als der Durchmesser D der Kugeln 25 (Figur 4). Die Weite W wird zwischen dem Boden 35 der Wälzkörpereinfüllöffnung 34 und dem gegenüberliegenden Bord 28 gemessen.

Die Differenz zwischen der Weite W und dem Durchmesser D kann jedoch durch elastische Verformung insbesondere des Außenrings 23 überwunden werden. Sofern das Wälzlager 18, insbesondere der Außenring 23, frei liegt, können die Kugeln 25 unter rein elastischer Verformung des Außenrings 23 in den Innenraum des Wälzlagers 18 geführt werden. Sie schnappen dann dort ein.

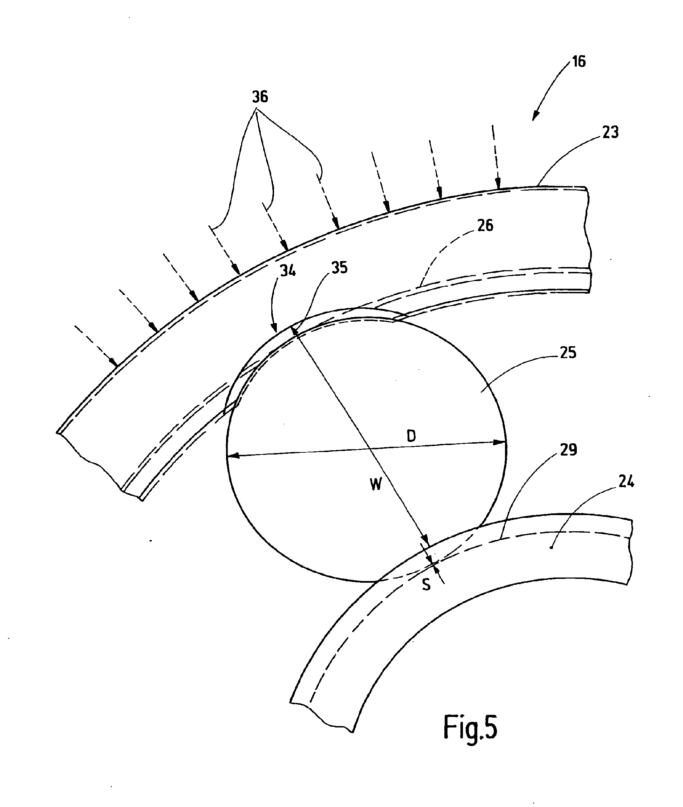

Das Wälzlager 18 sitzt in dem Umlenkhebel 8, vorzugsweise im Presssitz. Dieser ist in Figur 5 symbolisch durch Kraftpfeile 36 angedeutet, die die radial nach innen gerichtete Kraft symbolisieren, die von dem Lagersitz ausgeht und auf den Außenring 23 entlang seines gesamten Außenumfangs gleichmäßig einwirkt. Sie bewirkt eine geringfügige Kompression des Außenrings 23, die mindestens bewirkt, dass das in Figur 5 angedeutete Spiel S zwischen der Kugel 25 und ihren Laufbahnen 26, 29 überwunden wird. Außerdem bewirkt die Kompression des ungeteilten und deshalb fugenlosen Außenrings 23 eine weitere Verringerung der Weite W der Wälzkörpereinfüllausnehmung 34. Ist das Wälzlager 18 in seinen Lagersitz eingepresst, kann sich der Außenring 23 nicht mehr elastisch aufweiten. Die Wälzkörper oder Kugeln 25 können somit den Lagerinnenraum nicht mehr verlassen. Zusätzlich sind sie durch die Verengung der Wälzkörpereinfüllausnehmung 34 gesichert, die ein Austreten der Kugeln 25 noch weiter erschwert bzw. unmöglich macht.

Mit der vorstehend beschriebenen Erfindung gelingt es einen Unterzug 8 teilweise oder vollständig wälzgelagert auszubilden. Die Wälzkörper können Kugelform, Walzenform, Tonnenform, Konusform oder dergleichen aufweisen. Die Wälzkörper, deren Lagerspiel und der Außenring sind so bemessen, dass sie im Einbauzustand, wenn der Außenring 23 unter radialer Kompression in dem Lagersitz 19 sitzt, kein Spiel mehr haben. Das spielfreie Wälzlager ist insbesondere der schwingenden, stoßenden Belastung in dem Unterzug 8 gewachsen.

An dem Lagersitz 19 kann eine Markierung 37 vorgesehen sein, die die gewünschte Position der Wälzkörpereinfüllausnehmung 34 anzeigt. Vorzugsweise ist diese Position rechtwinklig zu der Längsrichtung der Unterzugstange 8 orientiert.

Bei einem erfindungsgemäßen Wälzlager 18 wird auf das Sprengen des Außenrings 23 verzichtet. Jedoch weist der Außenring 23 eine Einfüllnut 34 auf, die auch bei Gebrauch unverschlossen bleibt. Jedoch weist die Einfüllnut 34 in Bezug auf den Kugeldurchmesser D ein gewisses Untermaß auf, so dass die Kugeln 25 nicht herausfallen können. Außerdem weist der Außenring 23 des Lagers 18 eine gewisse radiale Elastizität auf. Der Einbau des Wälzlagers 18 erfolgt unter radialer Spannung im Presssitz, so dass die Kugeln 25 nicht mehr aus dem Lager 18 herausspringen können. Um eine winkelgenaue Montage des Wälzlagers 18 zu ermöglichen, ist die Einfüllnut 34 außerhalb des Bereiches maximaler Belastung angeordnet. Dazu ist die Einfüllnut 34 vorzugsweise so ausgebildet, dass sie trotz Vorhandenseins der Dichtungsscheibe 33 sichtbar bleibt.

Bei einem erfindungsgemäßen Wälzlager 18 wird auf das Sprengen des Außenrings 23 verzichtet. Jedoch weist der Außenring 23 eine Einfüllnut 34 auf, die auch bei Gebrauch unverschlossen bleibt. Jedoch weist die Einfüllnut 34 in Bezug auf den Kugeldurchmesser D ein gewisses Untermaß auf, so dass die Kugeln 25 nicht herausfallen können. Außerdem weist der Außenring 23 des Lagers 18 eine gewisse radiale Elastizität auf. Der Einbau des Wälzlagers 18 erfolgt unter radialer Spannung im Presssitz, so dass die Kugeln 25 nicht mehr aus dem Lager 18 herausspringen können. Um eine winkelgenaue Montage des Wälzlagers 18 zu ermöglichen, ist die Einfüllnut 34 außerhalb des Bereiches maximaler Belastung angeordnet. Dazu ist die Einfüllnut 34 vorzugsweise so ausgebildet, dass sie trotz Vorhandenseins der Dichtungsscheibe 33 sichtbar bleibt.

### Bezugszeichen

- 1: Fachbildemaschine
- 2: Webschaft
- 3: Schaftantriebmaschine
- 4: Schafthebel
- 5: Unterzug
- 6: Unterzugstange
- 7: Lasche
- 8, 9: Umlenkhebel
- 10, 11: Hebestangen
- 12 - 15: Hebelarme
- 16, 17: Lagerstellen
- 18: Wälzlager
- 19: Lagersitz
- 20: Lagereinrichtung
- 21, 22: Anschlussstelle
- 23: Außenring
- 24: Innenring
- 25: Kugeln
- 26: Laufbahn
- 27, 28: Borde
- 29: Laufbahn
- 30, 31: Borde
- 32, 33: Dichtungen
- 34: Wälzkörpereinfüllausnehmung
- W: Weite
- D: Durchmesser
- 35: Boden
- 36: Kraftpfeile

## Patentansprüche

1. Unterzug einer Webmaschine, mit einer Lagereinrichtung (20), die aufweist:
eine Unterzugstange (6) oder einen Umlenkhebel (8), die oder der einen Lagersitz (19) zur Aufnahme eines Außenrings (23) eines Wälzlagers (18) aufweist,
das Wälzlager (18), das einen Innenring (24) und den Außenring (23) aufweist, zwischen denen mehrere Kugeln (25) angeordnet sind,
wobei der Innenring (24) und/oder der Außenring (23) eine Wälzkörpereinfüllausnehmung (34) aufweisen, deren Weite (W) geringer ist als der Durchmesser (D) der verwendeten Kugeln (25),
wobei der Lagersitz (19) in montiertem Zustand eine innere Weite aufweist, die geringer ist als der Außendurchmesser des Lagerrings (23), um diesen im Presssitz zu halten und durch den Presssitz seinen Durchmesser zu reduzieren,
und wobei der Innenring (24) in montiertem Zustand aufgeweitet, d.h. in seinem Durchmesser vergrößert ist,
so dass die Kugeln (25) im Einbauzustand des Lagers (18) zwischen dem Innenring (24) und dem Außenring (23) spielfrei angeordnet sind,
und die Wälzkörpereinfüllöffnung (34) durch den Presssitz des Lagerrings (23) verengt ist.

2. Unterzug nach Anspruch 1, **dadurch gekennzeichnet, dass** die Wälzkörpereinfüllöffnung (34) des Wälzlagers (18) in dem Lagersitz (19) an einer vorbezeichneten Stelle angeordnet ist.

3. Unterzug nach Anspruch 1, **dadurch gekennzeichnet, dass** der Innenring (24) und der Außenring (23) jeweils mindestens eine Wälzkörperlaufbahn (26, 29) aufweisen, die beidseitig von Borden (28, 29, 30, 31) eingefasst ist, wobei die Wälzkörpereinfüllausnehmung (34) in zumindest einem der Borde (28) ausgebildet ist.

4. Lagereinrichtung nach Anspruch 1, **dadurch gekennzeichnet, dass** die Wälzkörpereinfüllöffnung (34) als Nut ausgebildet und axial orientiert ist.

5. Unterzug nach Anspruch 1, **dadurch gekennzeichnet, dass** die Wälzkörpereinfüllöffnung (34) als gerundete Nut ausgebildet ist.

6. Unterzug nach Anspruch 1, **dadurch gekennzeichnet, dass** der Innenring (24) und/oder der Außenring (23) eine Elastizität aufweisen, durch deren Überwindung die Wälzkörpereinfüllausnehmung (34) auf den Durchmesser (D) der verwendeten Wälzkörper (25) aufweitbar ist.

7. Unterzug nach Anspruch 1, **dadurch gekennzeichnet, dass** der Innenring (24) und der Außenring (23) jeweils als ungeteilter geschlossener Ring ausgebildet ist.

8. Unterzug nach Anspruch 1, **dadurch gekennzeichnet, dass** die Wälzkörper (25) käfiglos angeordnet sind.

9. Unterzug nach Anspruch 1, **dadurch gekennzeichnet, dass** zwischen den Lagerringen (23, 24) mindestens eine Dichtung (32, 33) angeordnet ist.

## Claims

1. Beam of a weaving loom, with a bearing device (20), comprising:
a beam rod (6) or a rocker (8), which has a bearing seat (19) to accommodate an outer ring (23) of a roller bearing (18),
the roller bearing (18), which has an inner ring (24) and the outer ring (23), between which several balls (25) are arranged,
wherein the inner ring (24) and/or the outer ring (23) exhibit a roller body filler recess (34), whose width (W) is less than the diameter (D) of the balls (25) used,
wherein the bearing seat (19) in the installed condition has an inside width, which is less than the outside diameter of the outer ring (23), in order to hold this in the press fit and reduce its diameter through the press fit,
and wherein the inner ring (24) is widened in the installed condition, that is to say its diameter is enlarged,
so that the balls (25) are arranged between the inner ring (24) and the outer ring (23) free from play in the installed condition of the bearing (18)
and the roller body filling recess (34) is narrowed by the press fit of the outer ring (23).

2. Beam according to claim 1, **characterized in that** the roller body filling recess (34) of the roller bearing (18) is arranged at a pre-designated place in the bearing seat (19).

3. Beam according to claim 1, **characterized in that** the inner ring (24) and the outer ring (23) each have at least one roller body track (26, 29), which is delimited on either side by inclines (28, 29, 30, 31), wherein the roller body filler recess (34) is formed in at least one of the inclines (28).

4. Storage facility according to claim 1, **characterized in that** the roller body filling recess (34) is designed as groove and is axially oriented.

5. Beam according to claim 1, **characterized in that** the roller body filling recess (34) is designed as rounded groove.

6. Beam according to claim 1, **characterized in that** the inner ring (24) and/or the outer ring (23) have an elasticity, due to whose surmounting the roller body filler recess (34) can be expanded to the diameter (D) of the roller bodies (25) used.

7. Beam according to claim 1, **characterized in that** the inner ring (24) and the outer ring (23) are each formed as undivided closed ring.

8. Beam according to claim 1, **characterized in that** the roller bodies (25) are arranged without a cage.

9. Beam according to claim 1, **characterized in that** at least one seal (32, 33) is arranged between the bearing rings (23, 24).

## Revendications

1. Support d'une machine à tisser, comportant un dispositif de palier (20), qui est doté et
d'une barre de support (6) ou d'un levier de renvoi (8), qui présente un siège de palier (19) destiné à recevoir une bague extérieure (23) d'un roulement (18),
le roulement (18) présentant une bague intérieure (24) et la bague extérieure (23) entre lesquelles sont disposées plusieurs billes (25),
la bague intérieure (24) et/ou la bague extérieure (23) présentant une cavité (34) d'introduction de corps roulants dont la largeur (W) est inférieure au diamètre (D) des billes utilisées (25),
le siège de roulement (19) présentant, à l'état monté, une largeur intérieure qui est inférieure au diamètre extérieur de la bague de palier (23) en vue de maintenir celle-ci en ajustement pressé et de réduire son diamètre du fait de l'ajustement pressé
et la bague intérieure (24) étant élargie à l'état monté, c'est-à-dire que son diamètre est augmenté, si bien que les billes (25), le roulement (18) étant à l'état monté, sont disposées sans jeu entre la bague intérieure (24) et la bague extérieure (23)
et que la cavité d'introduction des corps roulants (34) est rétrécie du fait de l'ajustement pressé de la bague de palier (23).

2. Support selon la revendication 1 **caractérisé en ce que** la cavité d'introduction de corps roulants (34) du roulement (18) est disposée dans le siège de roulement (19) à un emplacement désigné à l'avance.

3. Support selon la revendication 1 **caractérisé en ce que** la bague intérieure (24) et la bague extérieure (23) présentent chacune un chemin de corps roulants (26, 29) qui est enserré de deux côtés par des bords (28, 29, 30, 31), la cavité (34) d'introduction de corps roulants étant réalisée dans au moins un des bords (28).

4. Dispositif selon la revendication 1 **caractérisé en ce que** la cavité (34) d'introduction de corps roulants a une conformation de rainure et est orientée axialement.

5. Support selon la revendication 1 **caractérisé en ce que** la cavité (34) d'introduction de corps roulants est conformée en rainure arrondie.

6. Support selon la revendication 1 **caractérisé en ce que** la bague intérieure (24) et/ou la bague extérieure (23) présente(nt) une élasticité, qui ayant été surmontée, permet l'expansion de la cavité d'introduction de corps roulants (34) jusqu'à atteindre le diamètre (D) des corps roulants (25) utilisés.

7. Support selon la revendication 1 **caractérisé en ce que** la bague intérieure (24) et la bague extérieure (23) ont chacune une conformation de bague fermée sans coupure.

8. Support selon la revendication 1 **caractérisé en ce que** les corps roulants (25) sont disposés sans cage.

9. Support selon la revendication 1 **caractérisé en ce qu'**un joint (32, 33) est disposé entre les bagues de roulement (23, 24).
